# EUROPÄISCHE PATENTSCHRIFT

(11) **EP 0 635 653 B1**
(45) Veröffentlichungstag und Bekanntmachung des Hinweises auf die Patenterteilung: **13.01.1999**
(21) Anmeldenummer: 94111089.2
(22) Anmeldetag: 16.07.1994
(51) Int. Cl.: F16D 37/00, F16D 27/00

(54) **Vorrichtung zur Betätigung einer Kupplung**
Device for actuating a clutch
Dispositif pour la commande d'un embrayage

(30) Priorität: 21.07.1993 DE 4324451
(43) Veröffentlichungstag der Anmeldung: 25.01.1995
(73) Patentinhaber: ZF FRIEDRICHSHAFEN Aktiengesellschaft, 88038 Friedrichshafen (DE)
(72) Erfinder: Gazyakan, Ünal, D-88045 Friedrichshafen (DE); Thorenz, Frank, D-88090 Immenstaad (DE)

(56) Entgegenhaltungen:
- EP-A- 0 178 078
- EP-A- 0 199 642
- WO-A-89/04927
- DE-A- 4 137 142
- FR-A- 2 630 055
- GB-A- 2 217 401
- US-A- 4 440 035

## Beschreibung

Die Erfindung betrifft eine Vorrichtung zur Betätigung einer Kupplung mit einem rotierenden Eingangselement, einem Ausgangselement und einer elektrorheologischen Reibungseinrichtung zwischen Eingangselement und Ausgangselement, wobei die elektrorheologische Flüssigkeit in einem Raum aufgenommen ist, der von einem mit dem Eingangselement verbundenen ersten Kupplungsglied und von einem mit dem Ausgangselement verbundenen zweiten Kupplungsglied begrenzt ist.

Elektrorheologische Flüssigkeiten sind Mischungen aus Basisflüssigkeiten mit Feststoffpartikeln. Beim Anlegen einer Spannung bzw. beim Aufbau eines elektrischen Feldes erhöht sich die Viskosität dieses Gemisches sehr schnell, so daß auch Drehmomente über die Flüssigkeit übertragen werden können, da sich die Fähigkeit zum Übertragen von Scherspannungen ändert. Elektrorheologische Flüssigkeiten eignen sich daher für den Einsatz in Bremsen und Kupplungen, wie sie insbesondere im Fahrzeugbau verwendet werden.

Eine Vorrichtung zur Betätigung einer Kupplung auf der Basis elektrorheologischer Flüssigkeiten ist in der EP-A 0 178 078 beschrieben. Die in dieser Druckschrift offenbarte Vorrichtung dient ausschließlich der Betätigung einer Kupplung. Sowohl das Eingangselement als auch das Ausgangselement führen, wenn an der elektrorheologischen Flüssigkeit eine Spannung anliegt und ein elektrisches Feld aufgebaut wird, eine Drehbewegung durch. Diese Kupplung ist umständlich und aufwendig in ihrem Aufbau und somit auch teuer in der Herstellung.

Bei bekannten automatischen Kupplungsbetätigungssystemen wird die Kupplung hydraulisch, pneumatisch oder mittels Elektromotoren betätigt. Für derartige Betätigungsmechanismen sind Zusatzteile notwendig, welche die Kosten für die Kupplung enorm erhöhen. Bei einer Betätigung mittels eines Elektromotors ist zusätzlich ein sehr hoher mechanischer Aufwand (Kraftausgleich) erforderlich, der zu einem hohen Gewicht und einem hohen Preis der Kupplung führt.

Ein weiterer Nachteil bekannter, automatischer Kupplungsbetätigungssysteme ist das nur relativ langsame Aufbringen der zum Ein- bzw. Ausrücken der Kupplung benötigten Stellkraft. Bei hydraulischen und pneumatischen Systemen muß zuerst in den Zuführleitungen für die Medien der benötigte Druck aufgebaut werden und die Drehzahl eines Elektromotors ist abhängig vom aufzubringenden Drehmoment, so daß auch hier keine beliebig hohen Drehzahlen und extrem schnelle Betätigungen der Kupplungen möglich sind.

Der vorliegenden Erfindung liegt daher die Aufgabe zugrunde, eine Vorrichtung zur Betätigung einer Kupplung vorzusehen, die leicht und einfach hergestellt und montiert und sehr schnell betätigt werden kann, wenig Platz benötigt und kein hohes Gewicht aufweist.

Erfindungsgemäß wird diese Aufgabe dadurch gelöst, daß das Ausgangselement über eine Drehmomentumwandlungseinrichtung mit einem Ausrücker zur Betätigung einer Kupplung eines Kraftfahrzeugs verbunden ist.

Durch diese Anordnung sind pneumatische oder hydraulische Zusatzteile zur Betätigung der Kupplung unnötig, da das bereits von der Antriebsseite her vorhandene, relativ hohe Drehmoment ausgenutzt und in eine Linearbewegung umgesetzt wird.

Die genannten Nachteile bekannter Kupplungssysteme bezüglich der langsamen Ausrückbewegung entfallen, da durch das Ausnutzen eines großen Drehmomentes und der Bewegungsenergie einer antriebsseitigen Schwungmasse eine sehr große Kraft zur Betätigung der Vorrichtung vorhanden ist und mit dieser großen Kraft sehr kurze Betätigungszeiten realisiert werden.

Durch das geringe Gewicht und den geringen Platzbedarf entspricht die erfindungsgemäße Vorrichtung den Hauptanforderungen an Bauteile in Kraftfahrzeugen, da hier, zur Einsparung von Kraftstoff und Raum, ein geringes Gewicht und ein möglichst geringer Platzbedarf gefordert sind. Von der Antriebsseite, also vom Verbrennungsmotor des Kraftfahrzeuges, werden hohe Drehmomente bereitgestellt, die ein einwandfreies Funktionieren der erfindungsgemäßen Vorrichtung gewährleisten.

Bei einer kostengünstigen Konstruktion, die zudem den Vorteil eines gleichmäßigen, ruhigen Laufes sowie geringe Reibungsverluste aufweist, ist das Ausgangselement über eine Spindeleinrichtung als Drehmomentumwandlungseinrichtung mit dem Ausrücker der Kupplung verbunden (Anspruch 3).

Eine weitere, sehr vorteilhafte Ausgestaltung der Vorrichtung kann so ausgeführt sein, daß zur Regelung der Schalt- bzw. Stellkraft das elektrische Feld zwischen den beiden Kupplungsgliedern veränderbar ist (Anspruch 4).

Je nachdem, wie hoch die angelegte Spannung ist, ist die Fähigkeit der elektrorheologischen Flüssigkeit zur Übertragung von Scherspannungen ebenfalls unterschiedlich. Dieser physikalische Effekt läßt sich sehr gut dann anwenden, wenn nur ein bestimmtes Drehmoment zu einem bestimmten Zeitpunkt übertragen werden soll. Die Größe des zu übertragenen Drehmomentes läßt sich somit durch eine Regelung der angelegten Spannung einfach und präzise verändern.

Nachfolgend ist anhand der Zeichnung ein Ausführungsbeispiel der Erfindung prinzipmäßig beschrieben.

Bezug nehmend auf die Figur ist ein Schnitt durch eine Kupplung eines Kraftfahrzeugs dargestellt, bei der eine Welle 1 zum Getriebeeingang führt und ein Schwungrad 2 mit der Welle eines Antriebsmotors, die nicht dargestellt ist, verbunden ist. Das Schwungrad 2 ist fest mit einem Kupplungsdeckel 3 verbunden, der wiederum mit einem ersten Kupplungsglied 4 der Kupplung drehfest verbunden ist. Zwischen dem ersten Kupplungsglied 4 und einem zweiten Kupplungsglied 5 ist ein Raum 6 vorhanden, der mit elektrorheologischer Flüssigkeit gefüllt ist. Das zweite Kupplungsglied 5 ist in einem feststehenden Kupplungsflansch 7 angeordnet und über ein Ausgangselement 8 mit einer Drehmomentumwandlungseinrichtung 9 fest verbunden. Die Drehmomentumwandlungseinrichtung 9, die eine innere Kugelspindel und einen diese umgebenden Spindelkörper aufweisen kann, ist mit einem Ausrücker 10 der Kupplung verbunden, der auf der Welle 1 zum Getriebeeingang angeordnet ist. Der Ausrücker 10 hat in diesem Ausführungbeispiel die Funktion einer Schaltstange und ist mit der eine translatorische Bewegung ausführenden Kugelspindel verbunden.

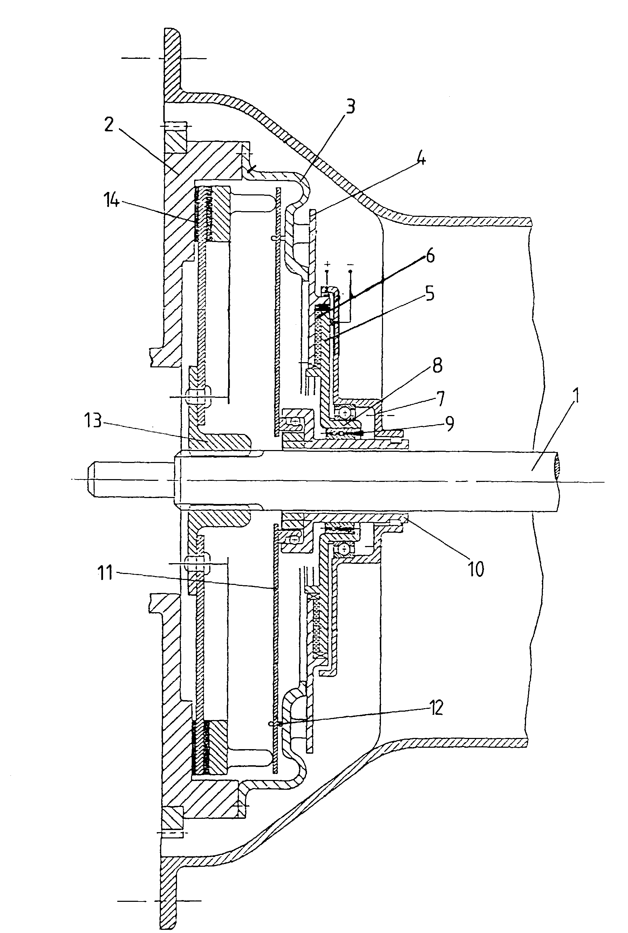

Der Ausrücker 10 der Kupplung betätigt bei einer Längsverschiebung, also einer translatorischen Bewegung, eine Kupplungsfeder 11, die auf Kippunkten 12 gelagert ist, und eine Mitnehmerscheibe 13 mit einem Reibbelag 14 gegen das Schwungrad 2 drückt. Die Mitnehmerscheibe 13 wiederum ist verschiebbar auf der Welle 1 angeordnet, so daß an dieser Stelle der Kreis des Kraftflusses geschlossen ist und die Kupplung in der in der Fig. 1 gezeigten Stellung ein Drehmoment übertragen kann.

Wird der Ausrücker 10 der Kupplung betätigt, d. h. wird er in der dargestellten Ansicht nach links verschoben, dreht die blattfederartige Kupplungsfeder 11 um den Kipppunkt 12 und drückt den Reibbelag 14 nicht mehr gegen das ständig rotierende Schwungrad 2. Somit wird kein Drehmoment mehr auf die Mitnehmerscheibe 13 und auf die Welle 1, d. h. das Ausgangselement, übertragen.

Das Verschieben des Ausrückers 10 erfolgt durch Umwandlung eines Drehmomentes in eine translatorische Bewegung in der Drehmomentumwandlungseinrichtung 9.

Durch Anlegen einer Spannung an der sich im aufnehmenden Raum 6 befindlichen elektrorheologischen Flüssigkeit, die somit Scherspannungen übertragen kann, bewegt sich das zweite Kupplungsglied 5 zusammen mit dem ersten Kupplungsglied 4. Wie hoch die erforderliche anzulegende Spannung ist, hängt von der Spaltbreite ab. Pro Millimeter Spaltbreite kann eine Spannung von bis zu 8 kV notwendig sein. Zur Regelung der Schalt- bzw. Stellkraft ist das elektrische Feld zwischen den Kupplungsgliedern 4 und 5 veränderbar.

Über den Flansch 8 wirkt das hierbei übertragene Drehmoment auf die Drehmomentumwandlungseinrichtung 9, so daß das Drehmoment in eine Axialkraft umgewandelt wird, die den Ausrücker 10 betätigt und die Kupplungsfeder 11 vorspannt, die somit den Reibbelag 14 nicht mehr gegen das Schwungrad 2 drückt. Die Drehmomentumwandlungseinrichtung ist vorzugsweise als Spindeleinrichtung ausgebildet.

Liegt keine Spannung mehr an der elektrorheologischen Flüssigkeit an, so drückt die in der vorgespannten Kupplungsfeder 11 gespeicherte Energie den Ausrücker 10 der Kupplung in seine Ausgangsstellung zurück und die Kupplung kann wieder ein Drehmoment übertragen.

## Patentansprüche

1. Vorrichtung zur Betätigung einer Kupplung mit einem rotierenden Eingangselement (2, 3), einem Ausgangselement (8) und einer elektrorheologischen Reibungseinrichtung zwischen Eingangselement (2, 3) und Ausgangselement (8), wobei die elektrorheologische Flüssigkeit in einem Raum (6) aufgenommen ist, der von einem mit dem Eingangselement (2, 3) verbundenen ersten Kupplungsglied (4) und von einem mit dem Ausgangselement (8) verbundenen zweiten Kupplungsglied (5) begrenzt ist, dadurch **gekennzeichnet,** daß das Ausgangselement (8) über eine Drehmomentumwandlungseinrichtung (9) mit einem Ausrücker (10) zur Betätigung einer Kupplung eines Kraftfahrzeugs verbunden ist.

2. Vorrichtung nach Anspruch 1, dadurch **gekennzeichnet,** daß eine Kupplungsfeder (11) den Ausrücker (10) gegen das Schleppmoment der elektrorheologischen Reibungseinrichtung in eine Grundstellung überführt.

3. Vorrichtung nach den Ansprüchen 1 und 2, dadurch **gekennzeichnet,** daß das Ausgangselement (8) über eine Spindeleinrichtung als Drehmomentumwandlungseinrichtung (9) mit dem Ausrücker (10) der Kupplung verbunden ist.

4. Vorrichtung nach Anspruch 1, dadurch **gekennzeichnet,** daß zur Regelung der Schalt- bzw. Stellkraft das elektrische Feld zwischen den beiden Kupplungsgliedern (4, 5) veränderbar ist.

## Claims

1. Device for actuating a clutch with a rotating input element (2, 3), an output element (8) and an electrorheological friction device between the input element (2, 3) and the output element (8), the electrorheological fluid being accommodated in a chamber (6), which is defined by a first clutch member (4) connected to the input element (2, 3) and a second clutch member (5) connected to the output element (8), characterised in that the output element (8) is connected via a torque converter device (9) to a release element (10) for actuating a clutch of a motor vehicle.

2. Device according to claim 1, characterised in that a clutch spring (11) transfers the release element (10) against the drag moment of the electrorheological friction device into a basic position.

3. Device according to claims 1 and 2, characterised in that the output element (8) is connected via a spindle device as torque converter device (9) to the release element (10) of the clutch.

4. Device according to claim 1, characterised in that, in order to control the switching or adjusting force, the electrical field between the two clutch members (4, 5) is variable.

## Revendications

1. Dispositif pour l'actionnement d'un embrayage avec un élément d'entrée rotatif (2, 3), un élément de sortie (8) et un dispositif à friction électrorhéologique entre l'élément d'entrée (2, 3) et l'élément de sortie (8), le liquide électrorhéologique étant recueilli dans un espace (6) délimité par un premier élément de l'embrayage (4) relié à l'élément d'entrée (2, 3) et un deuxième élément de l'embrayage relié au deuxième élément d'embrayage (5) **caractérisé** en ce que l'élément de sortie (8) est relié par l'intermédiaire d'un dispositif transformateur de couple (9) à un dispositif de débrayage (10) pour l'actionnement d'un embrayage d'un véhicule automobile.

2. Dispositif selon la revendication 1, **caractérisé** en ce qu'un ressort d'embrayage (11) transfère le dispositif de débrayage (10) dans une position de base en opposition au moment d'inertie du dispositif à friction électrorhéologique.

3. Dispositif selon les revendications 1 et 2, **caractérisé** en ce que l'élément de sortie (8) est relié au dispositif de débrayage (10) de l'embrayage par l'intermédiaire d'une installation à pivot fonctionnant comme dispositif transformateur de couple (9).

4. Dispositif selon la revendication 1, **caractérisé** en ce que, pour le réglage de la force de commande, respectivement de réglage, le champ électrique entre les deux éléments de l'embrayage est réglable.
